Europäisches Patentamt

European Patent Office

Office européen des brevets

(19)

(11) Numéro de publication : **0 034 772**
**B1**

(12) **FASCICULE DE BREVET EUROPÉEN**

(45) Date de publication du fascicule du brevet :
04.07.84

(51) Int. Cl.³ : **G 01 S 17/42, G 01 S 17/66**

(21) Numéro de dépôt : **81101014.9**

(22) Date de dépôt : **13.02.81**

(54) **Dispositif pour déterminer la position angulaire d'une cible éclairée par des impulsions lumineuses.**

(30) Priorité : **20.02.80 FR 8003676**

(43) Date de publication de la demande :
**02.09.81 Bulletin 81/35**

(45) Mention de la délivrance du brevet :
**04.07.84 Bulletin 84/27**

(84) Etats contractants désignés :
**BE DE FR GB IT NL**

(56) Documents cités :
**DE-B- 1 273 835**
**FR-A- 2 266 893**
**FR-A- 2 293 714**
**US-A- 4 128 759**

(73) Titulaire : **Compagnie Industrielle des Lasers CILAS ALCATEL**
**Route de Nozay**
**F-91460 Marcoussis (FR)**

(72) Inventeur : **Nory, Pierre**
**32, rue de Versailles**
**F-91400 Orsay (FR)**
Inventeur : **Ripart, Guy**
**77, boulevard de la Tour·**
**F-92350 Le Plessis Robinson (FR)**

(74) Mandataire : **Weinmiller, Jürgen et al**
**Zeppelinstrasse 63**
**D-8000 München 80 (DE)**

# Description

La présente invention concerne un dispositif pour déterminer la position angulaire d'une cible par rapport à un axe de visée, cette cible étant éclairée par des impulsions lumineuses, comportant,

— un objectif centré sur l'axe de visée, capable de concentrer sur une surface de réception la lumière provenant de la cible éclairée, de façon à former une tache lumineuse sur cette surface lorsque la cible est éclairée par une impulsion lumineuse,

— un système de réception de ladite tache lumineuse, ce système comprenant un récepteur photoélectrique,

— et un circuit électrique connecté à la sortie du récepteur photoélectrique pour élaborer des signaux représentatifs de la position de la tache lumineuse sur la surface de réception.

On connaît, p. e. à partir du document FR-A-22 93 714, un dispositif de ce type, dans lequel le récepteur est à « à quatre quadrants » c'est-à-dire qu'il est formé de quatre éléments indépendants optiquement et électriquement, dont les surfaces sensibles ou quadrants sont juxtaposées suivant deux axes rectangulaires du plan focal de l'objectif. Ce récepteur comporte quatre sorties électriques connectées à un circuit électrique capable d'élaborer, à partir des informations délivrées par le récepteur, des signaux électriques représentatifs de la position de l'image de la cible par rapport à ces axes rectangulaires et par conséquent représentatifs de la position angulaire de la cible par rapport à l'axe de l'objectif, l'orientation de cet axe étant connu. En pratique cette image est suffisamment grande pour couvrir au moins une partie de chacun des quatre quadrants et les signaux délivrés par le récepteur sont élaborés en comparant les énergies lumineuses reçues par les quatre quadrants.

Ce dispositif présente l'inconvénient d'exiger une sensibilité identique pour les quatre éléments du récepteur afin d'obtenir une réponse suffisamment linéaire du circuit électrique, notamment dans les conditions d'environnement sévères exigées pour le matériel militaire. Cette exigence est en pratique très difficile à réaliser et on est obligé pour essayer de s'en rapprocher d'utiliser des types de récepteur photoélectrique à faible sensibilité.

La présente invention a pour but de réaliser un dispositif à la fois robuste et précis pour déterminer la position angulaire d'une cible éclairée par des impulsions lumineuses.

La présente invention a pour objet un dispositif du type défini ci-dessus, caractérisé en ce que le système de réception comprend un groupe de n faisceaux de guides d'ondes optiques, les guides d'ondes faisant partie d'un même faisceau ayant des longueurs égales entre elles, ces longueurs variant d'un faisceau à l'autre de façon à former une suite de valeurs prédéterminées, les faces d'entrée des guides d'ondes de chaque faisceau étant disposées côte à côte en regard d'une portion distincte de la surface de réception afin que l'ensemble des faisceaux couvre pratiquement la totalité de cette surface et les faces de sortie des guides d'ondes étant disposées de façon que la fraction d'énergie lumineuse transmise par chaque faisceau impressionne le récepteur photoélectrique selon une séquence temporelle représentative de ladite suite de valeurs prédéterminées, le récepteur photoélectrique étant alors capable de délivrer en retour des impulsions électriques successives dont les amplitudes sont représentatives respectivement de l'éclairement, par ladite tache, desdites portions de la surface de réception.

Des formes particulières d'exécution de l'objet de la présente invention sont décrites ci-dessous à titre d'exemple, en référence aux dessins annexés dans lesquels :

la figure 1 représente schématiquement un mode de réalisation du dispositif selon l'invention,

la figure 2 montre l'image d'une cible sur la surface de réception du dispositif illustré par la figure 1, cette surface étant divisée en quatre portions,

les figures 3 et 4 montrent d'autres modes de division de la surface de réception du dispositif selon l'invention,

la figure 5 est un diagramme explicatif du fonctionnement du dispositif illustré par les figures 1 et 2 et la figure 6 représente une variante de réalisation du dispositif selon l'invention.

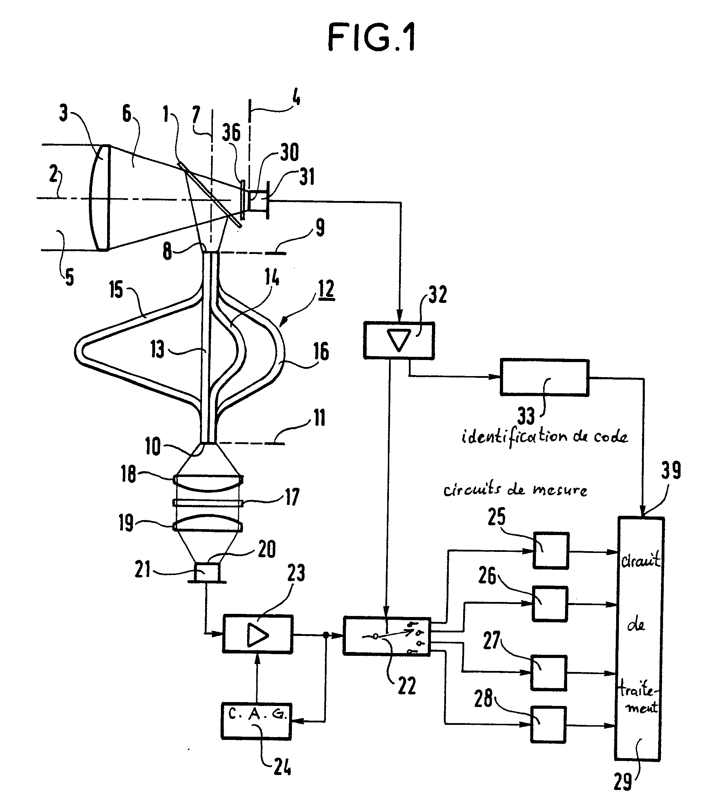

Sur la figure 1, un réflecteur 1 partiellement transparent est disposé à 45 degrés sur l'axe 2 d'un objectif 3, entre cet objectif et un plan 4 perpendiculaire à l'axe 2. L'objectif 3 reçoit un faisceau lumineux 5, tel qu'un faisceau laser, provenant de points éloignés situés dans son champ de réception. Le faisceau 5 forme, après traversée de l'objectif 3, un faisceau convergent 6 divisé en deux parties par le réflecteur 1. Une partie de l'énergie du faisceau 6 est concentrée, après renvoi par le réflecteur 1 suivant un axe 7 perpendiculaire à l'axe 2, sur une surface de réception 8 située dans un plan 9 perpendiculaire à l'axe 7.

Entre la surface de réception 8 et une autre surface 10 située dans un plan 11 parallèle au plan 9 est disposé un groupe 12 de quatre faisceaux 13, 14, 15 et 16 de guides d'ondes optiques telles que des fibres optiques. Chaque faisceau comprend plusieurs fibres optiques de même longueur, disposées en parallèle. A une extrémité du faisceau, les fibres sont serrées l'une contre l'autre de façon que leurs faces terminales soient disposées dans un plan pour former une section d'entrée de lumière ayant la forme d'un secteur circulaire d'angle au centre égal à quatre vingt dix degrés.

Les sections d'entrée des quatre faisceaux sont elles-mêmes disposées l'une à côté de l'autre dans le plan 9 et appliquées contre la surface de réception 8 pour couvrir toute la superficie de cette surface.

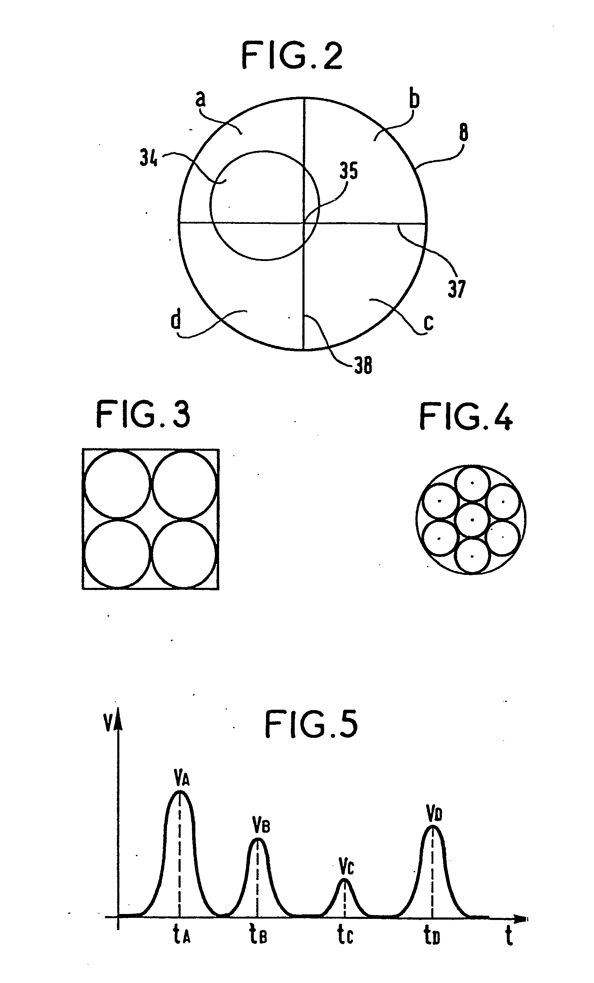

On voit sur la figure 2 que tout se passe comme si la surface de réception 8 était divisée en quatre portions égales a, b, c, d par deux axes rectangulaires 37, 38 se coupant sur l'axe 7, ces quatre portions étant respectivement en regard des quatre sections d'entrée des quatre faisceaux.

Bien entendu, la division de la surface de réception 8 peut s'effectuer d'une manière différente de celle indiquée sur la figure 2. On voit par exemple sur la figure 3 que la surface de réception peut aussi comporter quatre portions délimitées par quatre cercles égaux tangents entre eux, cette surface ayant alors sensiblement la forme d'un carré. De même le nombre de faisceaux de guides d'ondes optiques et de portions de la surface de réception peut être différent de quatre : il peut être par exemple de sept dans la disposition représentée sur la figure 4, dans laquelle la surface de réception a une forme sensiblement circulaire.

Les longueurs de guides d'ondes des faisceaux varient d'un faisceau à l'autre et forment une suite de valeurs prédéterminées, la différence entre deux longueurs successives pouvant être constante.

Les extrémités des fibres du groupe 12 opposées aux sections d'entrée sont serrées l'une contre l'autre de façon que leurs faces terminales forment une section de sortie de lumière suivant la surface plane 10.

Les longueurs de fibre de certains faisceaux peuvent être relativement importantes, par exemple de l'ordre de plusieurs mètres. Pour diminuer leur encombrement, on peut utiliser par exemple la disposition suivante : le faisceau le plus court est disposé suivant un axe et les autres faisceaux sont enroulés pour former des spires hélicoïdales autour de cet axe.

La surface 10 peut être directement disposée en regard de la surface sensible d'un récepteur photoélectrique. Mais comme en général cette surface sensible est plus petite que la surface 10, on dispose de préférence un système optique constitué de deux lentilles 18 et 19 pour former, sur la surface sensible 20 du récepteur photoélectrique 21, l'image de la surface 10. Ce récepteur photoélectrique peut être par exemple du type photodiode à avalanche. Un filtre optique 17 est disposé entre les lentilles 18 et 19.

La sortie électrique du récepteur 21 est reliée à un circuit séparateur 22 à travers un amplificateur 23. Un circuit de commande automatique de gain 24 est connecté d'une part à l'amplificateur 23 et d'autre part à la liaison commune entre le circuit séparateur 22 et l'amplificateur 23. Le circuit séparateur 22 comporte quatre sorties reliées respectivement à quatre circuits de mesure 25, 26, 27 et 28. Les sorties des quatre circuits de mesure sont connectées respectivement à un circuit de traitement 29.

La partie du faisceau convergent 6 qui n'est pas réfléchie vers la surface de réception 8 traverse sans déviation le réflecteur partiellement transparent 1 pour être concentrée, après passage à travers un filtre optique 26, sur la surface sensible 30 d'un détecteur photoélectrique 31 disposée dans le plan 4, ce détecteur étant du même type que le récepteur photoélectrique 21.

La sortie électrique du détecteur 31 est reliée d'une part au circuit diviseur 22 à travers un amplificateur 32 et d'autre part à un circuit d'identification de code 33 à travers ce même amplificateur 32. La sortie du circuit d'identification de code 33 est connectée à une borne de commande 39 du circuit de traitement 29.

Bien entendu il est possible, dans une variante du dispositif illustré par la figure 1, de disposer les faces d'entrée des fibres optiques dans le plan 4 à la place du détecteur 31, la surface sensible 30 de ce détecteur étant alors disposée dans le plan 9 à la place des faces d'entrée des fibres optiques.

Le dispositif décrit ci-dessus en référence aux figures 1 et 2 fonctionne de la manière suivante.

L'axe 2 de l'objectif 3 peut être orienté de façon à faire entrer la cible dans le champ de réception de l'objectif 3, par exemple à l'aide d'une lunette de visée (non représentée) dont l'axe est parallèle à l'axe 2.

La cible étant éclairée par une impulsion laser, une tache lumineuse 34 apparait sur la surface 8 (voir figure 2). On voit que cette tache, supposée circulaire, est décalée par rapport au point de concours 35 des deux axes rectangulaires 37 et 38. Chacune des portions a, b, c, d de la surface 8 reçoit une fraction d'énergie laser différente de celles des autres. Les quatre faisceaux transmettent donc des fractions d'énergie laser différentes les unes des autres, l'énergie transmise par un faisceau quelconque étant fonction de la surface de la partie de la tache 34 qui se trouve sur la portion de surface découpée par ce faisceau sur la surface de réception 8.

D'autre part le temps mis par les fractions d'énergie laser transmises par les quatre faisceaux de fibres pour aller du plan 9 au plan 11 sont différents les uns des autres, puisque les faisceaux ont des longueurs différentes.

Donc, pour chaque tache lumineuse formée sur la surface 8, la surface 10 reçoit une suite de quatre impulsions laser décalées dans le temps en fonction des longueurs de fibre des quatre faisceaux.

Le système optique 18, 19 transmet ces quatre impulsions laser à la surface sensible 20 du récepteur 21. Bien entendu, bien que cela n'apparaisse pas sur le dessin, la longueur axiale du système optique 18, 19 est négligeable par rapport aux longueurs de fibre. Le filtre 17 ne laisse passer la lumière que dans une bande de fréquence étroite centrée sur la fréquence de la lumière des impulsions laser éclairant la cible.

Les amplitudes des impulsions électriques délivrées par le récepteur 21 en réponse aux quatre impulsions laser sont représentatives de l'énergie laser transmise par chaque faisceau de fibres.

On a représenté les quatre impulsions électriques sur le diagramme de la figure 5, dans lequel l'amplitude V de ces impulsions est portée en ordonnée et le temps t en abscisse. On voit que les quatre impulsions A, B, C, D transmises respectivement par les faisceaux 13, 14, 16 et 15 arrivent sur le récepteur 21 au bout des temps $t_A$, $t_B$, $t_C$ et $t_D$ proportionnels à la longueur de fibre des faisceaux. D'autre part, les amplitudes $V_A$, $V_B$, $V_C$ et $V_D$ des impulsions électriques sont sensiblement proportionnelles à la surface que la tache 34 découpe respectivement sur les quatre portions a, b, c et d de la surface de réception 8 (figure 2).

Les quatre impulsions électriques arrivent dont à l'entrée du circuit séparateur 22 après passage dans l'amplificateur 23. Le circuit 24 de commande automatique de gain, d'un type connu, permet de maintenir l'amplitude moyenne des impulsions sortant de l'amplificateur 23 à un niveau constant qui ne dépend pas du niveau de réception (très variable) de l'image de la cible sur la surface 8.

Par ailleurs le filtre 36, analogue au filtre 17, élimine les rayonnements dont la fréquence est différente de celle des impulsions laser. Le détecteur 31 délivre, pour chaque impulsion laser éclairant la cible, une impulsion électrique de synchronisation qui n'est pas décalée dans le temps comme celles émises par le récepteur 21. Cette impulsion de synchronisation constitue un repère temporel pour les quatre impulsions électriques reçues à l'entrée du circuit séparateur 22.

Le circuit séparateur 22 délivre respectivement sur ses quatre sorties les quatre impulsions électriques résultant d'une tache lumineuse formée sur la surface 8. Ce circuit séparateur peut être un type analogue aux circuits démultiplexeurs connus dans le domaine des télécommunications.

Les circuits de mesure 25, 26, 27 et 28 délivrent à leurs sorties respectivement des signaux représentatifs de l'amplitude des quatre impulsions électriques.

Le circuit de traitement 29 élabore, à partir des signaux de mesure provenant des circuits 25 à 28, des signaux représentatifs de la position de la tache 34 sur la surface 8 (figure 2). Le circuit 29 peut, par exemple, additionner respectivement les signaux provenant des portions a et b, c et d, a et d, b et c. En comparant les signaux correspondant à « a + b » et « c + d », on obtient un signal représentatif de la position de la tache 34 par rapport à l'axe horizontal 37 (figure 2) de la surface 8. De même en comparant les signaux correspondant à a + d et b + c, on obtient un signal représentatif de la position de la tache 34 par rapport à l'axe vertical 38 (figure 2) de la surface 8.

Le circuit de traitement 29 peut comporter aussi, à chacune de ses quatre entrées, une porte dont la commande est reliée à la borne 39 du circuit 29.

Le circuit d'identification de code 33 reçoit les impulsions électriques amplifiées issues du détecteur 31 et ne délivre à sa sortie, vers la borne 39, un signal de déblocage des portes du circuit 29 que lorsque ces impulsions électriques sont émises suivant un code prédéterminé. Ce code sert à différencier des impulsions laser différentes sur un même terrain, et peut être par exemple un code de fréquence. Le circuit 33 mesure alors la fréquence des impulsions électriques qu'il reçoit et ne délivre un signal de déblocage que si cette fréquence correspond à une valeur prédéterminée, ce circuit délivrant un signal de blocage des portes tant que la fréquence des impulsions électriques délivrées par le détecteur 31 est différente de ladite valeur prédéterminée.

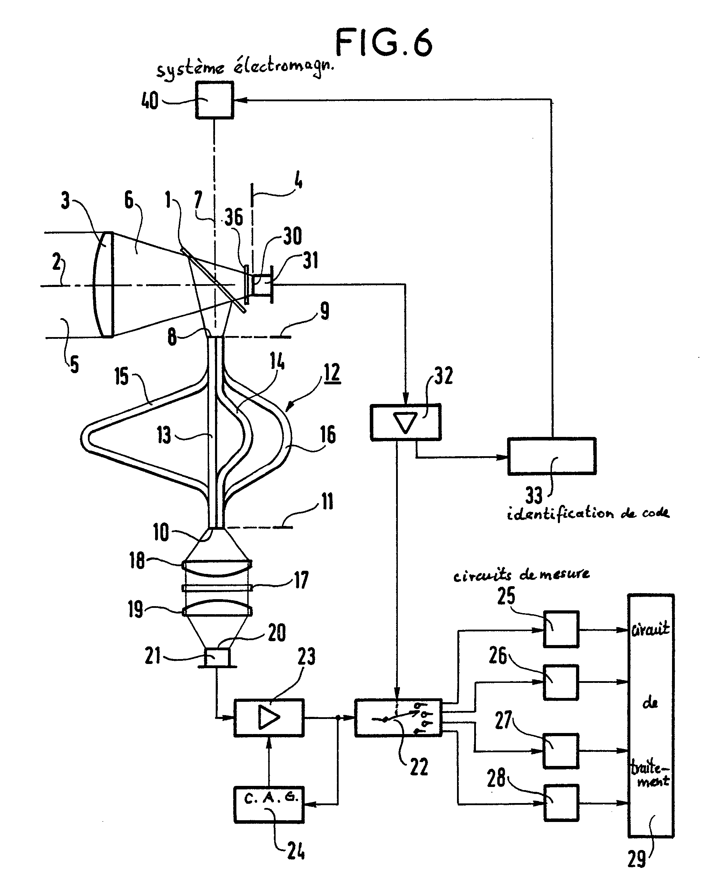

Le dispositif représenté sur la figure 6 présente de nombreux éléments communs avec celui de la figure 1, ces éléments étant désignés par la même référence. Cependant, le dispositif illustré par la figure 6 ne présente plus de liaison commune entre le circuit d'identification de code 33 et le circuit de traitement 29. Par contre, à la sortie du circuit 33, est relié un système électromagnétique 40 capable de disposer le réflecteur 1 sur le trajet du faisceau 6 seulement lorsque le circuit 33 reçoit à son entrée des impulsions émises selon le code prédéterminé, le système 40 maintenant le réflecteur 1 en dehors du trajet du faisceau 6 tant que les impulsions reçues par le circuit 33 sont émises selon un code différent du code prédéterminé.

Cette variante présente l'avantage de pouvoir rechercher la cible en dirigeant sur le détecteur 31 la totalité de l'énergie lumineuse traversant l'objectif 3, ce qui augmente la sensibilité du dispositif.

Le dispositif selon l'invention présente des avantages. En particulier, dans ce dispositif, les impulsions lumineuses dont les amplitudes permettent de déterminer la position de l'image de la cible sur la surface de réception sont séparées temporellement et sont reçues sur un récepteur unique qui délivre des impulsions électriques amplifiées par un amplificateur unique. On élimine ainsi toute variation relative de sensibilité entre les différents éléments du récepteur à quatre quadrants selon l'art antérieur. Il est possible d'appliquer au circuit électrique amplificateur une commande automatique de gain qui agit de façon identique sur tous les signaux et n'apporte ainsi aucune variation relative de sensibilité.

Ce récepteur unique peut être une diode à avalanche, ce qui apporte un gain de sensibilité important (de l'ordre de 100) par rapport aux récepteurs photoélectriques utilisés dans les dispositifs selon l'art antérieur. En effet, on n'emploie pas en pratique de diodes à avalanche dans les récepteurs à quatre quadrants, à cause de la difficulté qu'il y aurait à en trouver quatre ayant des courbes de réponse identiques.

La distorsion introduite par l'influence réciproque des diverses portions de la surface de réception des récepteurs à quatre quadrants est pratiquement annulée.

La forme extérieure de la surface de réception peut être déterminée à la demande (circulaire, carrée ou rectangulaire) par des regroupements différents de faisceaux de fibre optique. Il est à noter en effet que la forme extérieure de la face de sortie 10 du groupe de faisceaux de fibres optiques peut être différente de celle de la face d'entrée 8,

Enfin la disposition du récepteur photoélectrique n'est pas liée à celle de l'objectif, ce récepteur pouvant être situé en un point quelconque du système en fonction des possibilités d'implantation.

Le dispositif selon l'invention peut être appliqué à un système de poursuite de cible illuminée par laser.

## Revendications

1. Dispositif pour déterminer la position angulaire d'une cible par rapport à un axe de visée (2), cette cible étant éclairée par des impulsions lumineuses, comportant :
— un objectif (3) centré sur l'axe de visée, capable de concentrer sur une surface de réception (8) la lumière provenant de la cible éclairée, de façon à former une tache lumineuse sur cette surface lorsque la cible est éclairée par une impulsion lumineuse,
— un système de réception (12 à 21) de ladite tache lumineuse, ce système comprenant un récepteur photoélectrique (21),
— et un circuit électrique (22 à 29) connecté à la sortie du récepteur photoélectrique pour élaborer des signaux représentatifs de la position de la tache lumineuse sur la surface de réception, caractérisé en ce que le système de réception comprend un groupe (12) de n faisceaux (13 à 16) de guides d'ondes optiques, les guides d'ondes faisant partie d'un même faisceau ayant des longueurs égales entre elles, ces longueurs variant d'un faisceau à l'autre de façon à former une suite de valeurs prédéterminée, les faces d'entrée des guides d'ondes de chaque faisceau étant disposées côte à côte en regard d'une portion distincte (a, b, c, d) de la surface de réception (8) afin que l'ensemble des faisceaux couvre pratiquement la totalité de cette surface et les faces de sortie (10) des guides d'ondes étant disposées de façon que la fraction d'énergie lumineuse transmise par chaque faisceau impressionne le récepteur photoélectrique (21) selon une séquence temporelle ($t_A$, $t_B$, $T_C$, $t_D$) représentative de ladite suite de valeurs prédéterminées, le récepteur photoélectrique (21) étant alors capable de délivrer en retour des impulsions électriques successives dont les amplitudes ($V_A$, $V_B$, $V_C$, $V_D$) sont représentatives respectivement de l'éclairement, par ladite tache, desdites portions (a, b, c, d) de la surface de réception.

2. Dispositif selon la revendication 1, caractérisé en ce que le système de réception comporte en outre un système optique (17, 18, 19) disposé entre d'une part les faces de sortie (10) des guides d'ondes et d'autre part la surface sensible (20) du récepteur photoélectrique (21), pour former l'image de ces faces de sortie sur cette surface sensible.

3. Dispositif selon l'une des revendications 1 et 2, caractérisé en ce que ledit circuit électrique comporte :
— un circuit séparateur (22) dont l'entrée est reliée à la sortie du récepteur photoélectrique (21), ce circuit comportant n sorties sur lesquelles il est capable de délivrer respectivement les impulsions électriques successives qui correspondent à chaque tache lumineuse reçue sur la surface de réception,
— n circuits de mesure (25 à 28) respectivement connectés aux n sorties du circuit séparateur et capables de délivrer des signaux de mesure représentatifs respectivement de l'amplitude des impulsions électriques successives,
— et un circuit de traitement (29) relié aux sorties des n circuits de mesure et capable d'élaborer, à partir des signaux de mesure, lesdits signaux représentatifs de la position de la tache lumineuse sur la surface de réception.

4. Dispositif selon la revendication 3, caractérisé en ce qu'il comporte en outre un détecteur photoélectrique (31) disposé pour recevoir au moins une partie de la lumière ayant traversé l'objectif (3), ce détecteur étant capable de délivrer à sa sortie électrique un signal de synchronisation chaque fois qu'il reçoit une impulsion lumineuse, cette sortie électrique étant reliée audit circuit séparateur (22).

5. Dispositif selon la revendication 4, caractérisé en ce qu'il comporte en outre au moins un filtre optique (17, 36) disposé pour ne laisser passer la lumière reçue sur le récepteur et le détecteur que dans une bande de fréquence centrée sur la fréquence de la lumière des impulsions lumineuses, cette lumière étant monochromatique.

6. Dispositif selon la revendication 4, caractérisé en ce qu'il comporte en outre un circuit d'identification de code (33) dont l'entrée est reliée à la sortie électrique du détecteur (31), ce circuit d'identification de code étant capable de commander le blocage desdits signaux électriques tant que les impulsions lumineuses reçues par le détecteur ne correspondent pas à un code prédéterminé.

7. Dispositif selon la revendication 6, caractérisé en ce que le détecteur étant disposé pour recevoir toute la lumière ayant traversé l'objectif tant que les impulsions lumineuses ne correspondent pas au code prédéterminé, le récepteur photoélectrique ne recevant alors aucune lumière de sorte que les signaux électriques sont bloqués, il comporte en outre des moyens (40) commandés par ledit circuit d'identification de code (33) pour disposer entre l'objectif (3) et le détecteur (31) un réflecteur partiellement transparent (1) capable de diriger vers la surface de réception (8) une partie de la lumière ayant traversé l'objectif, ces moyens agissant dès que les impulsions lumineuses reçues par le détecteur correspondent au code prédéterminé.

8. Dispositif selon la revendication 6, caractérisé en ce qu'il comporte en outre un réflecteur partiellement transparent (1) disposé pour séparer en deux parties le faisceau ayant traversé l'objectif (3), une de ces parties étant dirigée vers la surface de réception (8) et l'autre vers le détecteur (31), la sortie du circuit d'identification de code (33) étant reliée au circuit de traitement (29) afin de bloquer les signaux électriques tant que les impulsions lumineuses reçues sur le détecteur ne correspondent pas au code prédéterminé.

8. Dispositif selon la revendication 3, caractérisé en ce que le circuit électrique comporte en outre d'une part un amplificateur (23) branché entre la sortie du récepteur photoélectrique (21) et le circuit séparateur (22), et d'autre part un circuit de commande automatique du gain (24) de cet amplificateur.

**Claims**

1. A device for determining the angular position of a target with respect to a sight axis (2), this target being illuminated by light pulses, the device comprising :
— objective lens means (3) centered on the sight axis, capable to concentrate the light coming from the illuminated target onto a reception surface (8), so as to form a light spot on said surface when the target is illuminated by a light pulse,
— a system (12 to 21) for receiving said light spot, this system including a photoelectric receiver (21),
— and an electric circuit (22 to 29) connected to the output of the photoelectric receiver to generate signals which are representative of the position of the light spot on the reception surface, characterized in that the receiving system comprises a group (12) of n bundles (13 to 16) of optical wave guides, the wave guides which form part of the same bundle being all of the same length, these lengths varying from one bundle to the other so as to form a sequence of predetermined values, the input surfaces of the wave guides of each bundle being disposed side by side and facing a distinct portion (a, b, c, d) of the reception surface (8) so that the set of all bundles covers practically the entire surface, and the output faces (10) of the wave guides being disposed in such a manner that the fraction of light energy transmitted by each bundle acts on the photoelectric receiver (21) according to a time sequence ($t_A$, $t_B$, $t_C$, $t_D$) which is representative of said sequence of predetermined values, the photoelectric receiver (21) being then capable of delivering in return successive electric pulses, the amplitudes ($V_A$, $V_B$, $V_C$, $V_D$) of which are representative respectively of the illumination of said portions (a, b, c, d) of the reception surface by said light spot.

2. A device according to claim 1, characterized in that the reception system further includes an optical system (17, 18, 19) disposed between the output surfaces (10) of the wave guides on the one hand and the sensitive surface (20) of the photoelectric receiver (21) on the other hand, to form the image of these output surfaces on said sensitive surface.

3. A device according to one of the claims 1 and 2, characterized in that said electric circuit comprises — a separator circuit (22) whose input is connected to the output of the photoelectric receiver (21), this circuit comprising n outputs on which it is capable to deliver respectively the successive electric pulses which correspond to each light spot received on the reception surface,
— n measuring circuits (25 to 28) respectively connected to the n outputs of the separator circuit and capable of delivering measuring signals which are representative of the amplitude of the successive electric pulses
— and a processing circuit (29) connected to the outputs of the n measuring circuits and capable of elaborating from the measuring signals said signals which are representative of the position of the light spot on the reception surface.

4. A device according to claim 3, characterized in that it further comprises a photoelectric detector (31) disposed to receive at least part of the light which passes through the objective lens means (3), this detector being capable to deliver at its electric output a synchronization signal each time it receives a light pulse, this electric output being connected to said separator circuit (22).

5. A device according to claim 4, characterized in that it further comprises at least one optical filter (17, 36) disposed to pass the received light on the receiver and the detector only in a frequency band which is centered on the frequency of the light of the light pulses, this light being monochromatic.

6. A device according to claim 4, characterized in that it further comprises a code identification circuit (33) whose input is connected to the electric output of the detector (31), and which is capable of controlling the blocking of said electric signals as long as the light pulses received by the detector do not correspond to a predetermined code.

7. A device according to claim 6, characterized in that, the detector being disposed to receive all the light having passed the objecive lens means as long as the light pulses do not correspond to the predetermined code, the photoelectric receiver then receiving no light, so that the electric signals are blocked, the device further comprises means (40) controlled by said code identification circuit (33) for disposing between the objective lens means (3) and the detector (31) a partially transparent reflector (1) capable to direct towards the reception surface (8) a portion of the light having passed the objective lens means, these means acting as soon as the light pulses received by the detector correspond to the predetermined code.

8. A device according to claim 6, characterized in that it further comprises a partially transparent reflector (1) disposed to separate in two portions the light bundle having passed the objective (3), one of these portions being directed towards the reception surface (8) and the other towards the detector (31), the output of the code identification circuit (33) being connected to the processing circuit (29) in order to block the electric signals as long as the light pulses received on the detector do not correspond to the predetermined code.

9. A device according to claim 3, characterized in that the electric circuit further comprises an amplifier (23) on the one hand, which is connected between the output of the photoelectric receiver (21) and the separator circuit (22), and an automatic circuit (24) on the other hand to control the gain of this amplifier.

### Ansprüche

1. Vorrichtung zur Bestimmung der Winkellage eines Ziels in Bezug auf eine Visierachse (2), wobei dieses Ziel von Lichtimpulsen bestrahlt wird und die Vorrichtung aufweist:

— ein Objektiv (3), das auf die Visierachse zentriert ist und auf einer Empfangsoberfläche (8) das vom bestrahlten Ziel kommende Licht konzentrieren kann, so daß auf dieser Oberfläche ein Lichtfleck gebildet wird, wenn das Ziel von einem Lichtimpuls bestrahlt wird,

— ein Empfangssystem (12 bis 21) für diesen Lichtfleck, wobei dieses System einen lichtelektrischen Empfänger (21) aufweist,

— und einen elektrischen Schaltkreis (22 bis 29), der an den Ausgang des lichtelektrischen Empfängers angeschlossen ist, um für die Position des Lichtflecks auf der Empfangsoberfläche repräsentative Signale zu erarbeiten, dadurch gekennzeichnet, daß das Empfangssystem eine Gruppe (12) von n Bündeln (13 bis 16) von Lichtwellenleitern aufweist, wobei diejenigen Wellenleiter, die zu einem gemeinsamen Bündel gehören, untereinander gleiche Längen haben, während diese Längen von einem Bündel zum anderen variieren, um eine Folge von vorbestimmten Werten zu bilden, wobei die Eingangsseiten der Wellenleiter jedes Bündels nebeneinander gegenüber einem bestimmten Abschnitt (a, b, c, d) der Empfangsoberfläche (8) liegen, so daß die Gesamtheit der Bündel praktisch die ganze Oberfläche bedeckt, und die Ausgangsseiten (10) der Wellenleiter so angeordnet sind, daß der Bruchteil der Lichtenergie, der von jedem Bündel übertragen wird, auf den lichtelektrischen Empfänger gemäß einer Zeitsequenz ($t_A$, $t_B$, $t_C$, $t_D$) einfällt, die repräsentativ für die Folge vorbestimmter Werte ist, worauf der lichtelektrische Empfänger aufeinanderfolgende elektrische Impulse ($V_A$, $V_B$, $V_C$, $V_D$) liefern kann, deren Amplituden jeweils repräsentativ sind für die Beleuchtung des Abschnitte (a, b, c, d) der Empfangsoberfläche durch den Lichtfleck.

2. Vorrichtung nach Anspruch 1, dadurch gekennzeichnet, daß das Empfangssystem außerdem ein optisches System (17, 18, 19) aufweist, das zwischen den Ausgangsseiten (10) der Wellenleiter einerseits und der lichtempfindlichen Oberfläche (20) des lichtelektrischen Empfängers (21) andererseits liegt, um das Bild dieser Ausgangsflächen auf dieser lichtempfindlichen Oberfläche zu bilden.

3. Vorrichtung nach einem der Ansprüche 1 und 2, dadurch gekennzeichnet, daß der elektrische Schaltkreis

— einen Trennschaltkreis (22), dessen Eingang an den Ausgang des lichtelektrischen Empfängers (21) angeschlossen ist und der n Ausgänge aufweist, an denen er jeweils die aufeinanderfolgenden elektrischen Impulse liefern kann, die jedem auf der Empfangsoberfläche empfangenen Lichtfleck entsprechen,

— n Meßschaltkreise (25 bis 28), die je mit einem der n Ausgänge des Trennschaltkreises verbunden sind und Meßsignale liefern könne, die jeweils für die Amplitude der aufeinanderfolgenden elektrischen Impulse repräsentativ sind,

— und einen Verarbeitungsschaltkreis (29) aufweist, der mit den Ausgängen der n Meßschaltkreise verbunden ist und ausgehend von den Meßsignalen die für die Lage des Lichtflecks auf der Empfangsoberfläche repräsentativen Signale ausarbeiten kann.

4. Vorrichtung nach Anspruch 3, dadurch gekennzeichnet, daß sie außerdem einen lichtelektrischen Detektor (31) aufweist, der mindestens einen Teil des Lichts empfangen kann, das das Objektiv (3) durchquert hat, wobei dieser Detektor an seinem elektrischen Ausgang ein Synchronisationssignal jedesmal dann liefern kann, wenn er einen Lichtimpulse empfängt, wobei dieser elektrische Ausgang mit dem Trennschaltkreis (22) verbunden ist.

5. Vorrichtung nach Anspruch 4, dadurch gekennzeichnet, daß er außerdem mindestens ein optisches Filter (17, 36) aufweist, das das empfangene Licht auf den Empfänger und den Detektor nur in einem Frequenzband durchläßt, das auf die Frequenz des Lichts der Lichtimpulse zentriert ist, wobei dieses Licht monochromatisch ist.

6. Vorrichtung nach Anspruch 4, dadurch gekennzeichnet, daß sie außerdem einen Kodeidentifikationsschaltkreis (33) aufweist, dessen Eingang mit dem elektrischen Ausgang des Detektors (31) verbunden ist und der das Blockieren der elektrischen Signale steuern kann, solange die vom Detektor empfangenen Lichtimpulse nicht einem vorbestimmten Kode entsprechen.

7. Vorrichtung nach Anspruch 6, dadurch gekennzeichnet, daß der Detektor das ganze Licht empfangen kann, das das Objektiv durchquert hat, solange die Lichtimpulse nicht dem vorbestimmten Kode entsprechen, während der lichtelektrische Empfänger dann kein Licht empfängt, so daß die elektrischen Signale blockiert sind, und daß die Vorrichtung außerdem Mittel (40) aufweist, die vom Kodeidentifikationsschaltkreis (33) gesteuert werden, um zwischen dem Objektiv (3) und dem Detektor (31) einen teilweise transparenten Reflektor (1) anzuordnen, der einen Teil des Lichts, das das Objektiv durchquert hat, zur Empfangsoberfläche (8) lenkt, wobei diese Mittel wirksam werden, sobald die vom Detektor empfangenen Lichtimpulse dem vorbestimmten Kode entsprechen.

8. Vorrichtung nach Anspruch 6, dadurch gekennzeichnet, daß sie außerdem einen teilweise transparenten Reflektor (1) aufweist, der das Bündel, das das Objektiv (3) durchquert hat, in zwei Teile teilt, wobei einer dieser Teile zur Empfangsoberfläche (8) und der andere zum Detektor (31) gelenkt wird, während der Ausgang des Kodeidentifikationsschaltkreises (33) mit dem Verarbeitungsschaltkreis (29) verbunden ist, um die elektrischen Signale solange zu blockieren, wie die vom Detektor empfangenen Lichtimpulse nicht dem vorbestimmten Kode entsprechen.

9. Vorrichtung nach Anspruch 3, dadurch gekennzeichnet, daß der elektrische Schaltkreis außerdem einerseits einen Verstärker (23), der zwischen dem Ausgang des lichtelektrischen Empfängers (21) und dem Trennschaltkreis (22) angeschlossen ist, und andererseits einen Schaltkreis zur automatischen Verstärkungsregelung (24) dieses Verstärkers aufweist.

# FIG.1

identification de code

circuits de mesure

circuit de traitement

C.A.G.

# FIG.2

# FIG.3

# FIG.4

# FIG.5

# FIG.6

système électromagn.

identification de code

circuits de mesure

circuit de traitement

C.A.G.